# EUROPÄISCHE PATENTSCHRIFT

(11) **EP 3 823 855 B1**
(45) Veröffentlichungstag und Bekanntmachung des Hinweises auf die Patenterteilung: **13.04.2022**
(21) Anmeldenummer: 19732305.8
(22) Anmeldetag: 14.06.2019
(51) Int. Cl.: B60K 35/00, B60K 37/00, B60K 37/04, B60K 37/06, B62D 25/14, B62D 1/00, B62D 1/04, B62D 1/187, B60R 11/02, B60R 11/00

(54) **KRAFTFAHRZEUG MIT EINER INSTRUMENTENTAFEL UND VERFAHREN ZUM BETREIBEN EINES KRAFTFAHRZEUGS**
MOTOR VEHICLE COMPRISING AN INSTRUMENT PANEL AND METHOD FOR OPERATING A MOTOR VEHICLE
VÉHICULE À MOTEUR COMPRENANT UN TABLEAU DE BORD ET PROCÉDÉ POUR FAIRE FONCTIONNER UN VÉHICULE À MOTEUR

(30) Priorität: 17.07.2018 DE 102018211852
(43) Veröffentlichungstag der Anmeldung: 26.05.2021
(73) Patentinhaber: Audi AG, 85045 Ingolstadt (DE)
(72) Erfinder: MERTENS, Joris, 85051 Ingolstadt (DE); HÉLOT, Jacques, 85051 Ingolstadt (DE); REDEKER, Immo, 85051 Ingolstadt (DE)
(86) Internationale Anmeldenummer: PCT/EP2019/065723
(87) Internationale Veröffentlichungsnummer: WO 2020/015939

(56) Entgegenhaltungen:
- WO-A1-2018/069699
- DE-A1-102016 011 461
- DE-B3-102012 011 882
- US-B1- 6 474 431

## Beschreibung

Die Erfindung betrifft ein Kraftfahrzeug mit einer Instrumententafel, welche wenigstens eine Anzeigeeinrichtung zum Anzeigen zumindest eines Inhalts aufweist, welcher mit einem Betriebszustand des Kraftfahrzeugs in Zusammenhang steht. Das Kraftfahrzeug umfasst eine Lenkhandhabe zum Beeinflussen einer Querführung des Kraftfahrzeugs durch einen Fahrer des Kraftfahrzeugs. Des Weiteren betrifft die Erfindung ein Verfahren zum Betreiben eines solchen Kraftfahrzeugs.

Die derzeitigen Interieurs von Kraftfahrzeugen bieten nur ein eingeschränktes Platzangebot für Insassen wie den Fahrer und den Beifahrer. Insbesondere die Instrumententafel oder Schalttafel befindet sich in einer fixierten, vorgegebenen Position bezogen auf den Fahrer. Bei der Instrumententafel handelt es sich somit bei derzeitigen Kraftfahrzeugen um ein passives Volumen beziehungsweise um eine Abdeckung beziehungsweise Verkleidung für technische Bauteile wie etwa Messanzeigen und dergleichen, welche man insbesondere in Zukunft besser in Kraftfahrzeugen unterbringen kann. Die Instrumententafel nimmt zudem ein teilweise unbrauchbares Volumen ein. Insbesondere ist durch die starre Position der Instrumententafel wenig Flexibilität im Innenraum beziehungsweise Fahrgastraum des Kraftfahrzeugs gegeben. Des Weiteren sind bei autonomen Fahrten die Layouts beziehungsweise Gestaltungen des Interieurs von Kraftfahrzeugen sehr passiv.

Man kann also insbesondere bei autonomen Fahrten von derzeitigen Kraftfahrzeugen den Innenraum noch nicht sehr flexibel nutzen. Vielmehr ist derzeit die Gestaltung des Innenraums oder Fahrgastraums für einen Fahrmodus konzipiert, bei welchem der Fahrer des Kraftfahrzeugs Fahrmanöver wie Lenken, Beschleunigen, Abbremsen und dergleichen selbst vornimmt. Die Architektur im Innenraum ist also passiv, fixiert und arretiert, und es besteht keine Möglichkeit zur Raumgewinnung insbesondere im Fußraumbereich des Fahrgastraums.

Zwar beschreibt die DE 10 2013 110 864 A1 ein Verfahren, bei welchem durch ein manuelles Wegschieben eines Lenkrads von dem Fahrer in Richtung Armaturenbrett eine Autopilotfunktion eines Fahrzeugs aktiviert werden kann. Ist die Autopilotfunktion aktiviert, so wird eine Anzeigevorrichtung in Fahrzeughochrichtung aus einer Aussparung ausgefahren, welche in dem Armaturenbrett vorgesehen ist. Auf der Anzeigevorrichtung werden dann Informationen der Autopilotfunktion angezeigt.

Des Weiteren beschreibt die CH 711 640 A2 eine Lenkvorrichtung, bei welcher Lenkradsegmente in einem autonomen Fahrmodus nach vorne geklappt werden. Zudem kann eine Anzeigefläche einer Anzeigevorrichtung zu einem Fahrersitzplatz hin und wieder zurück verfahren werden, sodass sich die Anzeigefläche näher am Fahrersitzplatz oder weiter weg vom Fahrersitzplatz befindet.

Und die DE 10 2015 226 586 A1 beschreibt ein Kraftfahrzeug mit einem Schalttafelmodul, bei welchem Bedienelemente, die Bestandteile des Schalttafelmoduls sind, beim Aktivieren eines Autopiloten eingefahren werden, um dem Fahrer mehr Freiraum zu geben.

Weiteren relevanten Stand der Technik zeigt die DE 10 2012 011882 B3.

Auch bei derartigen Fahrzeugen ist jedoch der für den Fahrer erreichbare Raumgewinn im autonomen Fahrmodus vergleichsweise gering.

Aufgabe der vorliegenden Erfindung ist es daher, ein Kraftfahrzeug und ein Verfahren der eingangs genannten Art zu schaffen, durch welches eine besonders flexible Gestaltung eines Fahrgastraums des Kraftfahrzeugs ermöglicht ist.

Diese Aufgabe wird durch ein Kraftfahrzeug mit den Merkmalen des Patentanspruchs 1 und durch ein Verfahren mit den Merkmalen des Patentanspruchs 9 ■ gelöst. Vorteilhafte Ausgestaltungen mit zweckmäßigen Weiterbildungen der Erfindung sind in den abhängigen Patentansprüchen angegeben.

Das erfindungsgemäße Kraftfahrzeug umfasst eine Instrumententafel, welche wenigstens eine Anzeigeeinrichtung zum Anzeigen zumindest eines Inhalts aufweist, welcher mit einem Betriebszustand des Kraftfahrzeugs in Zusammenhang steht. Das Kraftfahrzeug weist auch eine Lenkhandhabe zum Beeinflussen einer Querführung des Kraftfahrzeugs durch einen Fahrer des Kraftfahrzeugs auf. Die Instrumententafel ist relativ zu einer die Instrumententafel aufnehmenden und in einem Fahrgastraum des Kraftfahrzeugs angeordneten Halterung des Kraftfahrzeugs aus einer ersten Stellung, in welcher die Instrumententafel in die Halterung eingefahren ist, in eine zweite Stellung bewegbar, in welcher die Instrumententafel in Fahrzeuglängsrichtung weiter aus der Halterung herausbewegt ist als in der ersten Stellung. Die Instrumententafel ist auch aus der zweiten Stellung in die erste Stellung zurück bewegbar. Es kann also die gesamte Instrumententafel in die Halterung eingefahren beziehungsweise eingeschoben werden, insbesondere um dem Fahrer besonders viel Platz im Fahrgastraum zu bieten. Ist demgegenüber die Instrumententafel in die zweite Stellung verbracht, in welcher die Instrumententafel in Fahrzeuglängsrichtung weiter auf den Fahrer zu bewegt ist, so befindet sich die wenigstens eine Anzeigeeinrichtung der Instrumententafel näher am Fahrer.

Durch die Möglichkeit, die gesamte Instrumententafel, welche insbesondere eine Mehrzahl von Anzeigeeinrichtungen und/oder Bedienelementen aufweisen kann, in die erste Stellung oder in die zweite Stellung zu verbringen, also unterschiedlich weit in die Halterung einzufahren beziehungsweise in Fahrzeuglängsrichtung aus der Halterung auszufahren, ist eine besonders flexible Gestaltung des Fahrgastraums ermöglicht.

Zudem kann durch das Ausfahren aus der Halterung beziehungsweise das Einfahren in die Halterung in Fahrzeuglängsrichtung die Instrumententafel gut in Bezug auf den Insassen, insbesondere den Fahrer, justiert werden, sodass sich die Instrumententafel in einer ergonomisch günstigen Position befindet. Dies ist insbesondere dann vorteilhaft, wenn das Kraftfahrzeug in einem manuellen Fahrmodus genutzt wird, in welchem der Fahrer das Kraftfahrzeug steuert. Insbesondere ist es durch die Verstellbarkeit der gesamten, vorzugsweise eine Mehrzahl von Anzeigeeinrichtungen und/oder Bedienelementen aufweisenden Instrumententafel ermöglicht, dass Fahrzeugsitze wie insbesondere ein Fahrersitz und/oder ein Beifahrersitz vergleichsweise passiv bleiben, also in weniger großem Ausmaß zu verstellen sind. Dadurch ergibt sich eine besonders große Gestaltungsfreiheit für Sitzkonzepte im Kraftfahrzeug wie in einer Lounge.

Das Verschieben der Instrumententafel nach vorne in die erste Stellung sorgt auch dafür, dass der Insasse in Form des Fahrers und vorzugsweise auch eines Beifahrers des Kraftfahrzeugs einen komfortablen und großzügigen Einstieg in den Fahrgastraum des Kraftfahrzeugs hat.

Die wenigstens eine Anzeigeeinrichtung der Instrumententafel kann etwa eine Geschwindigkeitsanzeige, Kontrollleuchten für die Fahrtrichtungsanzeige, Fernlicht, eine Vorratsanzeige für Kraftstoff beziehungsweise für einen Ladezustand eines elektrischen Energiespeichers des Kraftfahrzeugs, einen Drehzahlanzeiger und dergleichen und/oder Anzeigen wie ein Display etwa eines Navigationssystems und/oder eines Infotainmentsystems umfassen. Bedienelemente der Instrumententafel können zum Betätigen von Funktionen des Infotainmentsystems, einer Klimatisierungseinrichtung, einer Freisprechanlage und/oder dergleichen vorgesehen sein.

Vorzugsweise ist die Lenkhandhabe an der Instrumententafel gehalten und zusammen mit der Instrumententafel aus der ersten Stellung in die zweite Stellung und zurück bewegbar. Denn dann behindert auch die Lenkhandhabe in der ersten Stellung den Fahrer besonders wenig. Und in der zweiten Stellung ist die Lenkhandhabe für den Fahrer gut erreichbar. Insbesondere ist hierbei vorgesehen, dass eine Steer-by-Wire Beeinflussung der Querführung des Kraftfahrzeugs realisiert ist, bei welcher keine mechanische Verbindung zwischen der Lenkhandhabe und den gelenkten Rädern des Kraftfahrzeugs besteht. Vielmehr wird bei dem Steer-by-Wire Konzept ein Lenkbefehl über ein Steuergerät zu einem, insbesondere elektromechanischen, Aktor weitergeleitet, welcher den Lenkbefehl ausführt und auf die Räder des Kraftfahrzeugs überträgt.

Als weiter vorteilhaft hat es sich gezeigt, wenn die Instrumententafel in der ersten Stellung oder während des Bewegens aus der zweiten Stellung in die erste Stellung um eine im Wesentlichen in Fahrzeugquerrichtung verlaufende Drehachse drehbar ist. Durch ein solches Rotieren beziehungsweise Verschwenken der Instrumententafel kann dafür gesorgt werden, das die Instrumententafel in der um die Drehachse gedrehten Ausrichtung den wenigstens einen Insassen, insbesondere den Fahrer des Kraftfahrzeugs, besonders wenig in seiner Bewegungsfreiheit einschränkt.

Erfindungsgemäß weist eine Stirnseite der Instrumententafel, welche in der ersten Stellung dem Fahrer zugewandt ist, einen ersten Flächenbereich auf, welcher in der ersten Stellung im Wesentlichen parallel zur Fahrzeughochrichtung ausgerichtet ist. Hierbei weist die Stirnseite der Instrumententafel einen zweiten Flächenbereich auf, wobei ein erstes Ende des zweiten Flächenbereichs in der ersten Stellung dem ersten Flächenbereich in Fahrzeuglängsrichtung näher ist als ein zweites Ende des zweiten Flächenbereichs. Durch diese Gestaltung ist erreicht, dass auch in der zweiten Stellung die Instrumententafel eine Bewegungsfreiheit von Knien des Fahrers besonders wenig einschränkt. Insbesondere können dem Fahrer in der ersten Stellung abgewandte Rückseiten der beiden Flächenbereiche einen stumpfen Winkel einschließen. Dementsprechend erstreckt sich dann der zweite Flächenbereich in der ersten Stellung schräg nach vorne. Dies ist für die Bewegungsfreiheit der Knie des Fahrers besonders vorteilhaft.

Vorzugsweise kann durch Drehen der Instrumententafel um die Drehachse der zweite Flächenbereich in eine Funktionsstellung verbracht werden, in welcher der zweite Flächenbereich im Wesentlichen parallel zur Fahrzeughochrichtung ausgerichtet ist. Dementsprechend ist dann in der Funktionsstellung der zweite Flächenbereich dem Fahrer zugewandt. Es können so an dem zweiten Flächenbereich vorgesehene Einrichtungen dem Fahrer zugänglich gemacht beziehungsweise für den Fahrer freigegeben werden. So ist eine besonders flexible Nutzung der Instrumententafel ermöglicht.

Die Drehung beziehungsweise leichte Rotation der Instrumententafel nach oben sorgt auch dafür, dass Insassen wie etwa der Fahrer und vorzugsweise auch ein Beifahrer des Kraftfahrzeugs sehr komfortabel in den Fahrgastraum des Kraftfahrzeugs einsteigen können.

Vorzugsweise ist eine Steuerungseinrichtung des Kraftfahrzeugs dazu ausgebildet, ein Verbringen der Instrumententafel in die erste Stellung und/oder ein Verbringen des zweiten Flächenbereichs in die Funktionsstellung in Abhängigkeit von einem Aktiviertsein eines autonomen Fahrmodus des Kraftfahrzeugs zu bewirken. Denn so ist im autonomen Fahrmodus für den Fahrer besonders viel Bewegungsfreiheit gegeben.

Als weiter vorteilhaft hat es sich gezeigt, wenn eine Steuerungseinrichtung des Kraftfahrzeugs dazu ausgebildet ist, ein Anzeigen von mit einer Fahrt des Kraftfahrzeugs in Zusammenhang stehenden Inhalten in dem ersten Flächenbereich zu bewirken, wobei die Steuerungseinrichtung weiter dazu ausgebildet ist, ein Anzeigen von weiteren Inhalten in dem zweiten Flächenbereich zu bewirken. So kann dafür gesorgt werden, dass für den Fahrer relevante Inhalte vom Fahrer immer dann gut erfasst werden können, wenn der erste Flächenbereich dem Fahrer zugewandt ist. In dem zweiten Flächenbereich können demgegenüber weitere Inhalte, insbesondere Entertainmentinhalte, angezeigt werden, welche der Fahrer dann insbesondere im autonomen Fahrmodus vorteilhaft nutzen kann. Dies gilt in besonderem Maße, wenn der zweite Flächenbereich größer ist als der erste Flächenbereich.

Zusätzlich oder alternativ kann in dem ersten Flächenbereich wenigstens eine Anzeigeeinrichtung zum Anzeigen von mit der Fahrt des Kraftfahrzeugs in Zusammenhang stehenden Inhalten angeordnet sein und in dem zweiten Flächenbereich wenigstens eine weitere Anzeigeeinrichtung zum Anzeigen von weiteren Inhalten. Es können also auch ortsfest verbleibende Anzeigeeinrichtungen in den jeweiligen Flächenbereichen vorgesehen sein. Dies vereinfacht die Ausgestaltung der Instrumententafel.

Vorzugsweise ist die Steuerungseinrichtung dazu ausgebildet, bei in die Funktionsstellung verbrachten zweitem Flächenbereich in dem zweiten Flächenbereich das Anzeigen der mit der Fahrt des Kraftfahrzeugs in Zusammenhang stehenden Inhalte zusätzlich zu den weiteren Inhalten zu bewirken. Beispielsweise können in einem Ausschnitt des zweiten Flächenbereichs die mit der Fahrt des Kraftfahrzeugs in Zusammenhang stehenden, also fahrrelevante Inhalte angezeigt beziehungsweise eingeblendet werden, während der größere Teil des zweiten Flächenbereichs zugleich zum Anzeigen von Entertainmentinhalten genutzt werden kann.

Besonders einfach lässt sich die Darstellung unterschiedlicher Inhalte in den beiden Flächenbereichen realisieren, wenn erfindunggemäß der erste Flächenbereich und der zweite Flächenbereich als Bereiche eines zusammenhängenden, an einem Grundkörper der Instrumententafel angeordneten Bildschirms ausgebildet sind. Beispielsweise kann ein derartiger Bildschirm wenigstens eine organische Leuchtdiode (OLED) umfassen oder durch wenigstens eine organische Leuchtdiode bereitgestellt sein.

Vorzugsweise weist die Instrumententafel eine Oberseite auf, welche zumindest in der zweiten Stellung im Wesentlichen horizontal ausgerichtet ist. Hierbei ist eine Fläche der Oberseite größer als eine Fläche einer der Oberseite gegenüberliegenden Unterseite der Instrumententafel. Durch das Vorsehen der großflächigen Oberseite der Instrumententafel ist eine großzügige Ablage geschaffen. Hierbei kann die Größe der Ablagefläche durch das Bewegen der Instrumententafel in die zweite Stellung nochmal erhöht werden. Zumindest ein Teil der Oberseite der Instrumententafel ist jedoch vorzugsweise auch dann zugänglich, wenn die Instrumententafel in die erste Stellung verbracht ist. Dann ist auch bereits in der ersten Stellung durch die Oberseite ein großflächiges Ablageelement beziehungsweise Verstauelement bereitgestellt.

Schließlich hat es sich als vorteilhaft gezeigt, wenn sich die Instrumententafel von einer fahrerseitigen Tür des Kraftfahrzeugs bis zu einer beifahrerseitigen Tür des Kraftfahrzeugs erstreckt. Denn dann kann durch das Verbringen der Instrumententafel in die erste Stellung auch für den Beifahrer besonders viel Bewegungsfreiheit erreicht werden.

Wenn die Instrumententafel die beiden Flächenbereiche aufweist und der zweite Flächenbereich durch das Drehen der Instrumententafel um die Drehachse in die Funktionsstellung verbringbar ist, dann ist dieser große, zweite Flächenbereich in der Funktionsstellung auch für den Beifahrer gut einsehbar beziehungsweise nutzbar. Auch deswegen ist eine großvolumige Ausgestaltung der Instrumententafel, bei welcher sich diese von der fahrerseitigen Tür bis zur beifahrerseitigen Tür erstreckt, im Hinblick auf die flexible Gestaltung des Fahrgastraums und die flexible Nutzung der Instrumententafel vorteilhaft.

Bei dem erfindungsgemäßen Verfahren zum Betreiben eines Kraftfahrzeugs wird mittels wenigstens einer Anzeigeeinrichtung einer Instrumententafel des Kraftfahrzeugs zumindest ein Inhalt angezeigt, welcher mit einem Betriebszustand des Kraftfahrzeugs in Zusammenhang steht. Das Kraftfahrzeug weist eine Lenkhandhabe zum Beeinflussen einer Querführung des Kraftfahrzeugs durch den Fahrer des Kraftfahrzeugs auf. Die Instrumententafel wird relativ zu einer die Instrumententafel aufnehmenden und in einem Fahrgastraum des Kraftfahrzeugs angeordneten Halterung aus einer ersten Stellung, in welcher die Instrumententafel in die Halterung eingefahren ist, in eine zweite Stellung bewegt, in welcher die Instrumententafel in Fahrzeuglängsrichtung weiter aus der Halterung herausbewegt ist als in der ersten Stellung. Alternativ wird die Instrumententafel aus der zweiten Stellung in die erste Stellung bewegt. Ein derartiges Verfahren ermöglicht eine besonders flexible Gestaltung des Fahrgastraums. Denn insbesondere in einem autonomen Fahrmodus des Kraftfahrzeugs kann die Instrumententafel in die erste Stellung bewegt, also in die Halterung eingefahren werden.

Im Folgenden sind Ausführungsbeispiele der Erfindung beschrieben. Hierzu zeigt:
- Fig. 1: perspektivisch und ausschnittsweise ein Kraftfahrzeug, wobei eine in einem Frontbereich des Kraftfahrzeugs angeordnete Instrumententafel zusammen mit einer Lenkeinheit zum Fahrer des Kraftfahrzeugs hin aus einer Aufnahme herausbewegt ist, welche in einer für die Instrumententafel vorgesehenen Halterung des Kraftfahrzeugs ausgebildet ist;
- Fig. 2: in einer schematischen Seitenansicht die Instrumententafel in einer in die Halterung eingefahrenen Position;
- Fig. 3: das Verschwenken der Instrumententafel zusammen mit der Lenkeinheit um eine in Fahrzeugquerrichtung verlaufende Drehachse derart, dass ein Teilbereich eines Bildschirms einem Fahrer des Kraftfahrzeugs zugewandt ist, wobei der Teilbereich des Bildschirms in der in Fig. 2 gezeigten Stellung der Instrumententafel sich schräg nach vorne erstreckend ausgerichtet ist; und
- Fig. 4: schematisch und ausschnittsweise das Kraftfahrzeug mit der Ausrichtung der Instrumententafel gemäß Fig. 3 in einer Perspektivansicht.

In den Figuren sind funktionsgleiche Elemente jeweils mit denselben Bezugszeichen versehen.

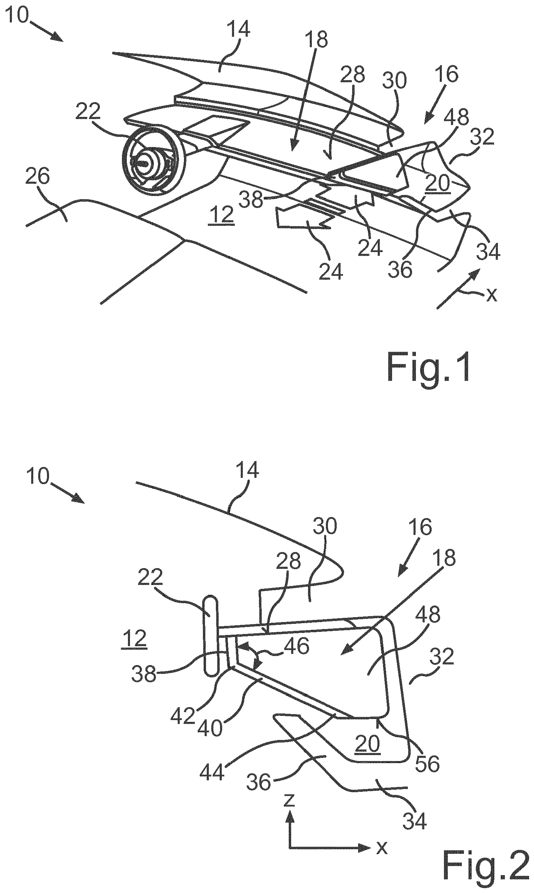

Von einem Kraftfahrzeug 10 ist in Fig. 1 ein vorderer Bereich eines Fahrgastraums 12 gezeigt. Zur Frontseite des Kraftfahrzeugs 10 ist der Fahrgastraum 12 durch eine Frontscheibe 14 begrenzt. In dem Fahrgastraum 12 ist eine Halterung 16 für eine Instrumententafel 18 angeordnet. Dementsprechend weist die Halterung 16 eine Aufnahme 20 für die Instrumententafel 18 auf. An der Instrumententafel 18 ist eine Lenkeinheit 22 oder Lenkhandhabe gehalten. Die Instrumententafel 18 weist vorliegend nicht näher dargestellte Anzeigeeinrichtungen auf, welche dem Anzeigen von Inhalten dienen, die mit einem Betriebszustand des Kraftfahrzeugs 10 in Zusammenhang stehen. Beispiele für derartige Anzeigeeinrichtungen können eine Geschwindigkeitsanzeige, ein Kilometerzähler, eine Füllstandsanzeige eines Kraftstofftanks und/oder eine Ladezustandsanzeige eines elektrischen Energiespeichers wie etwa einer Hochvoltbatterie des Kraftfahrzeugs 10, eine Kühlmitteltemperaturanzeige, Kontrollleuchten etwa für Fahrtrichtungsanzeiger sowie Scheinwerfer des Kraftfahrzeugs, einen Ölstand und dergleichen umfassen.

Des Weiteren kann in der Instrumententafel 18 ein Infotainmentsystem untergebracht sein, welches Funktionen wie ein Display, ein Autoradio, ein Navigationssystem, eine Freisprecheinrichtung, wenigstens ein Fahrerassistenzsystem, eine Klimaanlage und dergleichen umfassen kann. Zudem kann die Instrumententafel 18 Bedienelemente für derartige Funktionen aufweisen.

Vorliegend kann die gesamte Instrumententafel 18 zusammen mit mehreren Anzeigeeinrichtungen und/oder Bedienelementen in Fahrzeuglängsrichtung x verschoben werden, welche in Fig. 1 durch einen Pfeil veranschaulicht ist. Es kann also die Instrumententafel 18 in Fahrzeuglängsrichtung x in die Halterung 16 eingefahren werden, sodass die Instrumententafel 18 maximal weit in der Aufnahme 20 aufgenommen ist. Diese erste, eingefahrene Stellung der Instrumententafel 18 ist in Fig. 2 in einer Seitenansicht auf die Instrumententafel 18 dargestellt.

In Fig. 1 ist demgegenüber die Instrumententafel 18 in eine zweite Stellung bewegt dargestellt, in welcher die Instrumententafel 18 weiter aus der Halterung 16 herausbewegt ist als in der in Fig. 2 gezeigten ersten Stellung. Die Verfahrrichtungen beim Verbringen der Instrumententafel 18 in die erste Stellung beziehungsweise in die zweite Stellung und zurück sind in Fig. 1 durch weitere Pfeile 24 veranschaulicht.

In der in Fig. 1 gezeigten ausgefahrenen Stellung der Instrumententafel 18 ist einerseits die Lenkeinheit 22 für einen sich auf einem Fahrersitz 26 befindenden (vorliegend nicht gezeigten) Fahrer des Kraftfahrzeugs 10 gut erreichbar. Die in Fig. 1 gezeigte Stellung der Instrumententafel 18 ist demnach insbesondere dann vorteilhaft, wenn das Kraftfahrzeug 10 in einem manuellen Fahrmodus betrieben wird, in welchem der Fahrer das Kraftfahrzeug 10 steuert.

Wie aus Fig. 1 gut ersichtlich ist, weist die Instrumententafel 18 eine Oberseite 28 auf, welche zumindest in der zweiten Stellung im Wesentlichen horizontal ausgerichtet ist. So kann im ausgefahrenen Zustand der Instrumententafel 18 die Oberseite 28 als großflächige beziehungsweise großzügige Ablage genutzt werden. Die Nutzung dieser Oberseite 28 als Ablage ist jedoch auch in einem autonomen Fahrmodus des Kraftfahrzeugs 10 möglich, in welchem sich die Instrumententafel 18 ebenfalls in der in Fig. 1 gezeigten zweiten Stellung befinden kann.

Die Halterung 16 weist ein plattenförmiges Teil 30 auf, welches die in der Halterung 16 ausgebildete Aufnahme 20 oberseitig begrenzt, und an welches die Frontscheibe 14 heranreicht. Die Oberseite 28 der Instrumententafel 18 ist in der in Fig. 1 gezeigten zweiten Stellung und in der in Fig. 2 gezeigten ersten Stellung einer Unterseite dieses plattenförmigen Teils 30 zugewandt. In Richtung Fahrzeugfront ist die Aufnahme 20 durch eine Rückwand 32 der Halterung 16 begrenzt. Unterseitig ist die Aufnahme 20 durch eine untere Wand 34 begrenzt, an welche sich ein Kniefänger 36 anschließt. Der Kniefänger 36 erstreckt sich von der unterseitigen Wand 34 aus in schräger Richtung nach oben und hin zum (nicht gezeigten) Fahrer.

Insbesondere aus Fig. 2 ist gut ersichtlich, dass die Instrumententafel 18 eine an die Oberseite 28 angrenzende Stirnseite aufweist. Die Stirnseite umfasst einen ersten Flächenbereich 38, welcher in der in Fig. 2 gezeigten ersten Stellung dem Fahrer zugewandt ist. Dieser erste Flächenbereich 38 ist in der ersten Stellung im Wesentlichen parallel zur Fahrzeughochrichtung z ausgerichtet, welche in Fig. 2 durch einen Pfeil veranschaulicht ist. Ein zweiter Flächenbereich 40 der Stirnseite der Instrumententafel 18 erstreckt sich in der in Fig. 2 gezeigten ersten Stellung von dem ersten Flächenbereich 38 ausgehend schräg nach vorne und nach unten. Dementsprechend ist in der ersten Stellung ein erstes Ende 42 des zweiten Flächenbereichs 40 dem ersten Flächenbereich 38 in Fahrzeuglängsrichtung x näher als ein zweites Ende 44 des zweiten Flächenbereichs 40. Dem Fahrer abgewandte Rückseiten der Flächenbereiche 38, 40 schließen vorliegend einen stumpfen Winkel 46 ein. Diese Geometrie der Instrumententafel 18 mit dem kleineren, schmaleren ersten Flächenbereich 38 und dem im Verhältnis zu dem ersten Flächenbereich 38 größeren zweiten Flächenbereich 40 ist insbesondere im autonomen Fahrmodus des Kraftfahrzeugs 10 vorteilhaft nutzbar.

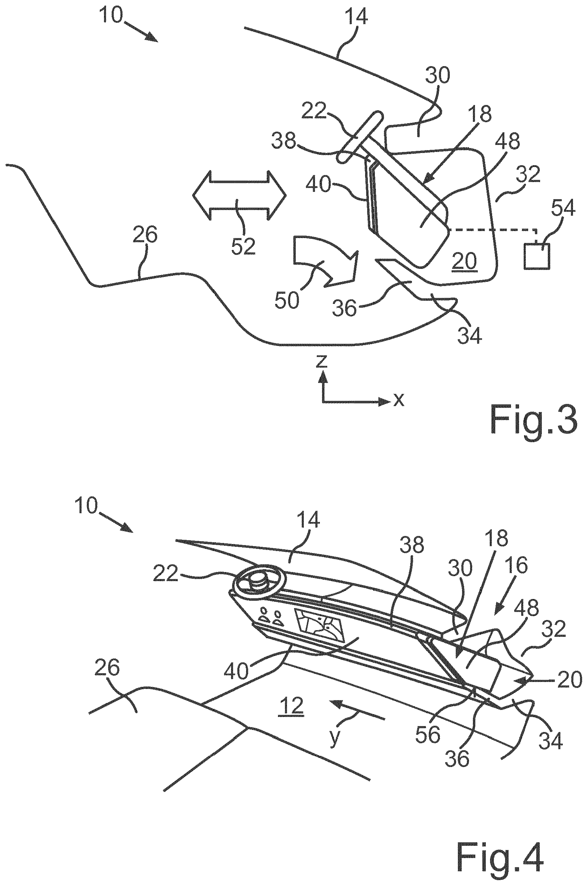

Dies soll mit Bezug auf Fig. 3 erläutert werden. Es kann nämlich in der ersten Stellung der Instrumententafel 18 oder während des Bewegens der Instrumententafel 18 aus der zweiten Stellung (vergleiche Fig. 1) in die erste Stellung (vergleiche Fig. 2) die Instrumententafel 18 gedreht beziehungsweise um eine Drehachse rotiert oder gekippt werden, welche im Wesentlichen in Fahrzeugquerrichtung verläuft. Diese Kippbewegung oder Rotation der Instrumententafel 18 im in die Aufnahme 20 der Halterung 16 eingefahrenen Zustand sorgt dann dafür, dass der zweite Flächenbereich 40 in eine Funktionsstellung verbracht wird, in welcher der zweite Flächenbereich 40 im Wesentlichen parallel zur Fahrzeughochrichtung z ausgerichtet ist. Diese Funktionsstellung des zweiten Flächenbereichs 40 ist in Fig. 3 gezeigt.

In dieser Funktionsstellung ist der zweite Flächenbereich 40 dem Fahrer zugewandt, welcher sich auf dem Fahrersitz 26 befindet. Durch diese Rotation der Instrumententafel 18 um die Drehachse können somit Anzeigeelemente beziehungsweise Anzeigeeinrichtungen freigegeben oder zugänglich gemacht werden, welche in dem zweiten Flächenbereich 40 angeordnet beziehungsweise vorgesehen sind. Insbesondere können die Flächenbereiche 38, 40 als Bereiche eines zusammenhängenden Bildschirms ausgebildet sein, welcher an einem Grundkörper 48 der Instrumententafel 18 angeordnet ist.

Insbesondere im autonomen Fahrmodus des Kraftfahrzeugs 10 kann somit die Instrumententafel 18 zusammen mit der Lenkeinheit 22 in Fahrzeuglängsrichtung x nach vorne verfahren und zusätzlich rotiert werden, sodass auf der rotierten Seite der Instrumententafel 18 die Anzeige beziehungsweise der zweite Flächenbereich 40 des Bildschirms freigegeben ist. Des Weiteren sind durch die kubische beziehungsweise im Querschnitt einem rechtwinkligen Trapez entsprechende Form der Instrumententafel 18 einerseits die große Ablagefläche in Form der Oberseite 28 und andererseits der große Bildschirm in Form des zweiten Flächenbereichs 40 gut nutzbar.

In dem schmalen, ersten Teilbereich oder Flächenbereich 38 dieses Bildschirms können sowohl in der in Fig. 2 gezeigten Stellung als auch in der in Fig. 1 gezeigten Stellung der Instrumententafel 18 insbesondere mit der Fahrt des Kraftfahrzeugs 10 im Zusammenhang stehende Inhalte, also fahrerrelevante Inhalte wie etwa ein Kilometerstand, eine Fahrgeschwindigkeit, Kontrollleuchten für das Betätigtsein von Fahrtrichtungsanzeigern und/oder Licht, eine Kühlmitteltemperatur oder dergleichen angezeigt werden. Im autonomen Fahrmodus kann dann der größere, zweite Flächenbereich 40 dem Fahrer zugewandt werden, wie dies in Fig. 3 und Fig. 4 dargestellt ist.

Die Rotationsbewegung beziehungsweise Kippbewegung der Instrumententafel 18 um die in Fahrzeugquerrichtung y verlaufende Drehachse ist in Fig. 3 durch einen Pfeil 50 veranschaulicht. Der ebenfalls in Fig. 3 dargestellte Doppelpfeil 52 gibt demgegenüber die Verschiebebewegung der Instrumententafel 18 in Fahrzeuglängsrichtung x an.

Auf dem großen, zweiten Flächenbereich 40 des an dem Grundkörper 48 angeordneten Bildschirms können im autonomen Fahrmodus des Kraftfahrzeugs 10 dem Fahrer des Kraftfahrzeugs 10 sowie auch einem Beifahrer insbesondere Entertainmentinhalte dargeboten werden. Vorzugsweise steuert eine Steuerungseinrichtung 54 des Kraftfahrzeugs 10, welche schematisch in Fig. 3 gezeigt ist, die Flächenbereiche 38, 40 des Bildschirms derart an, dass auch dann, wenn der zweite Flächenbereich 40 in die in Fig. 3 gezeigte Funktionsstellung verbracht ist, in dem zweiten Flächenbereich 40 zusätzlich mit der Fahrt des Kraftfahrzeugs 10 in Zusammenhang stehende Inhalte angezeigt werden. Dies kann beispielsweise in einem kleinen Ausschnitt des zweiten Flächenbereichs 40 vorgenommen werden.

Die Steuerungseinrichtung 54 des Kraftfahrzeugs 10 oder ein weiteres derartiges Steuergerät des Kraftfahrzeugs 10 kann zudem das Verschieben der Instrumententafel 18 in die in Fig. 2 gezeigte zweite Stellung beziehungsweise auch das Verkippen beziehungsweise Rotieren der Instrumententafel 18 in die in Fig. 3 gezeigte Stellung bewirken, in welcher der zweite Flächenbereich 40 in die Funktionsstellung verbracht ist. Dies kann insbesondere auf ein der Steuerungseinrichtung 54 übermitteltes Signal hin erfolgen, welches angibt, dass ein autonomer Fahrmodus des Kraftfahrzeugs 10 aktiviert ist. Das Verschieben der Instrumententafel 18 in Fahrzeuglängsrichtung x und/oder das Rotieren der Instrumententafel 18 um die in Fahrzeugquerrichtung y verlaufende Drehachse kann jedoch auch zusätzlich oder alternativ durch Bedienhandlungen eines Insassen des Kraftfahrzeugs 10 bewirkt werden. Zudem kann der Insasse des Kraftfahrzeugs 10 bevorzugt auch durch eine Bedieneingabe bewirken, dass im autonomen Fahrmodus die Instrumententafel 18 in die in Fig. 1 gezeigte, ausgefahrene Stellung verbracht wird, wenn der Insasse des Kraftfahrzeugs 10 dies wünscht.

Insbesondere aus Fig. 2, aber auch aus Fig. 3 und Fig. 4 ist des Weiteren gut ersichtlich, dass eine Fläche der Oberseite 28 größer ist als eine Fläche einer Unterseite 56 der Instrumententafel 18, welche der Oberseite 28 gegenüberliegt. Diese Unterseite 56 kann dann, wenn der zweite Flächenbereich 40 in die Funktionsstellung verbracht ist, in Anlage mit einer der Aufnahme 20 zugewandten Innenseite des Kniefängers 36 sein.

Aus Fig. 1 und aus Fig. 4 ist ersichtlich, dass sich die Instrumententafel 18 über die gesamte Breite des Kraftfahrzeugs 10 erstreckt, also von einer (nicht gezeigten) fahrerseitigen Tür des Kraftfahrzeugs 10 bis zu einer (ebenfalls nicht gezeigten) beifahrerseitigen Tür des Kraftfahrzeugs 10. Dadurch sind in dem autonomen Fahrmodus des Kraftfahrzeugs 10 bei in die Funktionsstellung verbrachtem zweitem Flächenbereich 40 die Anzeigeeinrichtungen und/oder Bedienelemente, welche in dem zweiten Flächenbereich 40 vorgesehen sind, auch für den Beifahrer gut einsehbar beziehungsweise zu betätigen.

Die verfahrbare und vorzugsweise auch rotierbare Schalttafel beziehungsweise Instrumententafel 18 bietet einerseits den Insassen des Kraftfahrzeugs, insbesondere dem Fahrer und dem Beifahrer des Kraftfahrzeugs 10 mehr Platz. Zudem ist durch das Verfahren und/oder das Rotieren der Instrumententafel 18 eine besonders große Gestaltungsfreiheit gegeben, wie die Insassen im Fahrgastraum 12 beziehungsweise Innenraum des Kraftfahrzeugs 10 sitzen können.

Das Verschieben der Instrumententafel 18 nach vorne und zusätzlich die leichte Rotierung der Instrumententafel 18 nach oben ermöglicht dem Insassen in Form des Fahrers und des Beifahrers des Kraftfahrzeugs 10 zusätzlich einen komfortablen und großzügigen Einstieg in den Fahrgastraum 12 beziehungsweise Innenraum des Kraftfahrzeugs 10.

## Patentansprüche

1. Kraftfahrzeug mit einer Instrumententafel (18), welche wenigstens eine Anzeigeeinrichtung zum Anzeigen zumindest eines Inhalts aufweist, welcher mit einem Betriebszustand des Kraftfahrzeugs (10) in Zusammenhang steht, und mit einer Lenkhandhabe (22) zum Beeinflussen einer Querführung des Kraftfahrzeugs (10) durch einen Fahrer des Kraftfahrzeugs (10),
wobei die Instrumententafel (18) relativ zu einer die Instrumententafel (18) aufnehmenden und in einem Fahrgastraum (12) des Kraftfahrzeugs (10) angeordneten Halterung (16) aus einer ersten Stellung, in welcher die Instrumententafel (18) in die Halterung (16) eingefahren ist, in eine zweite Stellung, in welcher die Instrumententafel (18) in Fahrzeuglängsrichtung (x) weiter aus der Halterung (16) herausbewegt ist als in der ersten Stellung, und aus der zweiten Stellung in die erste Stellung zurück bewegbar ist, wobei eine in der ersten Stellung dem Fahrer zugewandte Stirnseite der Instrumententafel (18) einen ersten Flächenbereich (38) aufweist, welcher in der ersten Stellung im Wesentlichen parallel zur Fahrzeughochrichtung (z) ausgerichtet ist, und einen zweiten Flächenbereich (40), und wobei ein erstes Ende (42) des zweiten Flächenbereichs (40) in der ersten Stellung dem ersten Flächenbereich (38) in Fahrzeuglängsrichtung (x) näher ist als ein zweites Ende (44) des zweiten Flächenbereichs (40),
**dadurch gekennzeichnet, dass**
der erste Flächenbereich (38) und der zweite Flächenbereich (40) als Bereiche eines zusammenhängenden, an einem Grundkörper (48) der Instrumententafel (18) angeordneten Bildschirms ausgebildet sind.

2. Kraftfahrzeug nach Anspruch 1,
**dadurch gekennzeichnet, dass**
die Lenkhandhabe (22) an der Instrumententafel (18) gehalten und zusammen mit der Instrumententafel (18) aus der ersten Stellung in die zweite Stellung und zurück bewegbar ist.

3. Kraftfahrzeug nach einem der vorhergehenden Ansprüche,
**dadurch gekennzeichnet, dass**
die Instrumententafel (18) in der ersten Stellung oder während des Bewegens aus der zweiten Stellung in die erste Stellung um eine im Wesentlichen in Fahrzeugquerrichtung (y) verlaufende Drehachse drehbar ist.

4. Kraftfahrzeug nach Anspruch 3,
**dadurch gekennzeichnet, dass**
durch Drehen der Instrumententafel (18) um die Drehachse der zweite Flächenbereich (40) in eine Funktionsstellung verbringbar ist, in welcher der zweite Flächenbereich (40) im Wesentlichen parallel zur Fahrzeughochrichtung (z) ausgerichtet ist.

5. Kraftfahrzeug nach einem der Ansprüche 1 bis 3 oder nach Anspruch 4, **dadurch gekennzeichnet, dass**
eine Steuerungseinrichtung (54) des Kraftfahrzeugs (10) dazu ausgebildet ist, ein Verbringen der Instrumententafel (18) in die erste Stellung und/oder ein Verbringen des zweiten Flächenbereichs (40) in die Funktionsstellung in Abhängigkeit von einem Aktiviertsein eines autonomen Fahrmodus des Kraftfahrzeugs (10) zu bewirken.

6. Kraftfahrzeug nach einem der Ansprüche 1 bis 5,
**dadurch gekennzeichnet, dass**
- eine Steuerungseinrichtung (54) des Kraftfahrzeugs (10) dazu ausgebildet ist, ein Anzeigen von mit einer Fahrt des Kraftfahrzeugs (10) in Zusammenhang stehenden Inhalten in dem ersten Flächenbereich (38) und von weiteren Inhalten in dem zweiten Flächenbereich (40) zu bewirken und/oder
- in dem ersten Flächenbereich (38) wenigstens eine Anzeigeeinrichtung zum Anzeigen von mit einer Fahrt des Kraftfahrzeugs (10) in Zusammenhang stehenden Inhalten und in dem zweiten Flächenbereich (40) wenigstens eine weitere Anzeigeeinrichtung zum Anzeigen von weiteren Inhalten angeordnet ist.

7. Kraftfahrzeug nach Anspruch 4 oder 5 und nach Anspruch 6,
**dadurch gekennzeichnet, dass**
die Steuerungseinrichtung (54) dazu ausgebildet ist, bei in die Funktionsstellung verbrachtem zweiten Flächenbereich (40) in dem zweiten Flächenbereich (40) das Anzeigen der mit der Fahrt des Kraftfahrzeugs (10) in Zusammenhang stehenden Inhalte zusätzlich zu den weiteren Inhalten zu bewirken.

8. Kraftfahrzeug nach einem der vorhergehenden Ansprüche,
**dadurch gekennzeichnet, dass**
- die Instrumententafel (18) eine Oberseite (28) aufweist, welche zumindest in der zweiten Stellung im Wesentlichen horizontal ausgerichtet ist, wobei eine Fläche der Oberseite (28) größer ist als eine Fläche einer der Oberseite (28) gegenüberliegenden Unterseite (56) der Instrumententafel (18) und/oder
- sich die Instrumententafel (18) von einer fahrerseitigen Tür des Kraftfahrzeugs (10) bis zu einer beifahrerseitigen Tür des Kraftfahrzeugs (10) erstreckt.

9. Verfahren zum Betreiben eines Kraftfahrzeugs (10), bei welchem mittels wenigstens einer Anzeigeeinrichtung einer Instrumententafel (18) des Kraftfahrzeugs (10) zumindest ein Inhalt angezeigt wird, welcher mit einem Betriebszustand des Kraftfahrzeugs (10) in Zusammenhang steht, wobei das Kraftfahrzeug (10) eine Lenkhandhabe (22) zum Beeinflussen einer Querführung des Kraftfahrzeugs (10) durch einen Fahrer des Kraftfahrzeugs (10) aufweist,
wobei die Instrumententafel (18) relativ zu einer die Instrumententafel (18) aufnehmenden und in einem Fahrgastraum (12) des Kraftfahrzeugs (10) angeordneten Halterung (16) aus einer ersten Stellung, in welcher die Instrumententafel (18) in die Halterung (16) eingefahren ist, in eine zweite Stellung, in welcher die Instrumententafel (18) in Fahrzeuglängsrichtung (x) weiter aus der Halterung (16) herausbewegt ist als in der ersten Stellung, oder aus der zweiten Stellung in die erste Stellung bewegt wird, wobei eine in der ersten Stellung dem Fahrer zugewandte Stirnseite der Instrumententafel (18) einen ersten Flächenbereich (38) aufweist, welcher in der ersten Stellung im Wesentlichen parallel zur Fahrzeughochrichtung (z) ausgerichtet ist, und einen zweiten Flächenbereich (40), und wobei ein erstes Ende (42) des zweiten Flächenbereichs (40) in der ersten Stellung dem ersten Flächenbereich (38) in Fahrzeuglängsrichtung (x) näher ist als ein zweites Ende (44) des zweiten Flächenbereichs (40),
**dadurch gekennzeichnet, dass**
als der erste Flächenbereich (38) und der zweite Flächenbereich (40) Bereiche eines zusammenhängenden, an einem Grundkörper (48) der Instrumententafel (18) angeordneten Bildschirms verwendet werden.

## Claims

1. Motor vehicle having an instrument panel (18) which has at least one display apparatus for displaying at least one piece of content associated with an operating state of the motor vehicle (10), and having a steering handle (22) for influencing lateral control of the motor vehicle (10) by a driver of the motor vehicle (10),
wherein the instrument panel (18) is movable, relative to a holder (16) which receives the instrument panel (18) and is arranged in a passenger compartment (12) of the motor vehicle (10), from a first position, in which the instrument panel (18) is retracted into the holder (16), to a second position, in which the instrument panel (18) is moved further out of the holder (16) in the longitudinal direction (x) of the vehicle than in the first position, and from the second position back into the first position, wherein a front side of the instrument panel (18) facing the driver in the first position has a first surface region (38), which in the first position is aligned substantially parallel to the vertical direction (z) of the vehicle, and a second surface region (40), and wherein a first end (42) of the second surface region (40) in the first position is closer to the first surface region (38) in the longitudinal direction (x) of the vehicle than a second end (44) of the second surface region (40),
**characterised in that**
the first surface region (38) and the second surface region (40) are formed as regions of a continuous screen arranged on a main body (48) of the instrument panel (18).

2. Motor vehicle according to claim 1,
**characterised in that**
the steering handle (22) is held on the instrument panel (18) and is movable together with the instrument panel (18) from the first position to the second position and back.

3. Motor vehicle according to any of the preceding claims,
**characterised in that**
the instrument panel (18) is rotatable in the first position or during movement from the second position to the first position about an axis of rotation extending substantially in the transverse direction (y) of the vehicle.

4. Motor vehicle according to claim 3,
**characterised in that**
by rotating the instrument panel (18) about the axis of rotation, the second surface region (40) can be brought into a functional position in which the second surface region (40) is aligned substantially parallel to the vertical direction (z) of the vehicle.

5. Motor vehicle according to any of claims 1 to 3 or according to claim 4, **characterised in that**
a control apparatus (54) of the motor vehicle (10) is designed to cause the instrument panel (18) to be brought into the first position and/or the second surface region (40) to be brought into the functional position depending on whether an autonomous driving mode of the motor vehicle (10) is activated.

6. Motor vehicle according to any of claims 1 to 5,
**characterised in that**
- a control apparatus (54) of the motor vehicle (10) is designed to cause contents associated with a journey of the motor vehicle (10) to be displayed in the first surface region (38) and further contents to be displayed in the second surface region (40) and/or
- at least one display apparatus for displaying contents associated with a journey of the motor vehicle (10) is arranged in the first surface region (38) and at least one further display apparatus for displaying further contents is arranged in the second surface region (40).

7. Motor vehicle according to claim 4 or 5 and according to claim 6,
**characterised in that**
the control apparatus (54) is designed to cause the contents associated with the journey of the motor vehicle (10) to be displayed in the second surface region (40) in addition to the further contents when the second surface region (40) is brought into the functional position.

8. Motor vehicle according to any of the preceding claims,
**characterised in that**
- the instrument panel (18) has an upper side (28) which is aligned substantially horizontally at least in the second position, wherein a surface of the upper side (28) is larger than a surface of a lower side (56) of the instrument panel (18) opposite the upper side (28) and/or
- the instrument panel (18) extends from a driver-side door of the motor vehicle (10) to a passenger-side door of the motor vehicle (10).

9. Method for operating a motor vehicle (10), in which at least one piece of content associated with an operating state of the motor vehicle (10) is at displayed by at least one display apparatus of an instrument panel (18) of the motor vehicle (10), wherein the motor vehicle (10) has a steering handle (22) for influencing lateral control of the motor vehicle (10) by a driver of the motor vehicle (10),
wherein the instrument panel (18) is movable, relative to a holder (16) which receives the instrument panel (18) and is arranged in a passenger compartment (12) of the motor vehicle (10), from a first position, in which the instrument panel (18) is retracted into the holder (16), to a second position, in which the instrument panel (18) is moved further out of the holder (16) in the longitudinal direction (x) of the vehicle than in the first position, and from the second position back into the first position, wherein a front side of the instrument panel (18) facing the driver in the first position has a first surface region (38), which in the first position is aligned substantially parallel to the vertical direction (z) of the vehicle, and a second surface region (40), and wherein a first end (42) of the second surface region (40) in the first position is closer to the first surface region (38) in the longitudinal direction (x) of the vehicle than a second end (44) of the second surface region (40),
**characterised in that**
regions of a continuous screen arranged on a main body (48) of the instrument panel (18) are used as the first surface region (38) and the second surface region (40).

## Revendications

1. Véhicule automobile comprenant un tableau de bord (18) qui présente au moins un dispositif d'affichage pour afficher au moins un contenu qui est lié à un état de fonctionnement du véhicule automobile (10), et un volant de direction (22) pour manipuler un guidage transversal du véhicule automobile (10) par un conducteur du véhicule automobile (10),
dans lequel le tableau de bord (18) peut être déplacé par rapport à un support (16) recevant le tableau de bord (18) et agencé dans un compartiment passagers (12) du véhicule automobile (10) à partir d'une première position, dans laquelle le tableau de bord (18) est introduit dans le support (16), jusque dans une seconde position, dans laquelle le tableau de bord (18) est davantage sorti du support (16) dans la direction longitudinale (x) du véhicule que dans la première position, et de la seconde position en retour dans la première position, dans lequel une face d'extrémité du tableau de bord (18) tournée vers le conducteur dans la première position présente une première zone de surface (38), qui est orientée dans la première position sensiblement parallèlement à la direction de hauteur (z) du véhicule, et une seconde zone de surface (40), et dans lequel une première extrémité (42) de la seconde zone de surface (40) est plus proche de la première zone de surface (38) dans la direction longitudinale (x) du véhicule qu'une seconde extrémité (44) de la seconde zone de surface (40) dans la première position,
**caractérisé en ce que**
la première zone de surface (38) et la seconde zone de surface (40) sont conçues comme des zones d'un écran associé agencé sur un corps de base (48) du tableau de bord (18).

2. Véhicule automobile selon la revendication 1,
**caractérisé en ce que**
le volant de direction (22) est maintenu sur le tableau de bord (18) et peut être déplacé avec le tableau de bord (18) de la première position à la seconde position, et inversement.

3. Véhicule automobile selon l'une quelconque des revendications précédentes, **caractérisé en ce que**
le tableau de bord (18) peut tourner dans la première position ou pendant le déplacement de la seconde position à la première position autour d'un axe de rotation s'étendant sensiblement dans la direction transversale (y) du véhicule.

4. Véhicule automobile selon la revendication 3,
**caractérisé en ce que**
en faisant tourner le tableau de bord (18) autour de l'axe de rotation, la seconde zone de surface (40) peut être amenée dans une position fonctionnelle dans laquelle la seconde zone de surface (40) est orientée sensiblement parallèlement au sens (z) de la hauteur du véhicule.

5. Véhicule automobile selon l'une quelconque des revendications 1 à 3 ou selon la revendication 4,
**caractérisé en ce que**
un dispositif de commande (54) du véhicule automobile (10) est conçu pour entraîner un déplacement du tableau de bord (18) dans la première position et/ou un déplacement de la seconde surface (40) dans la position fonctionnelle en fonction d'une activation d'un mode de conduite autonome du véhicule automobile (10).

6. Véhicule automobile selon l'une quelconque des revendications 1 à 5,
**caractérisé en ce que**
- un dispositif de commande (54) du véhicule automobile (10) est conçu pour entraîner un affichage d'un contenu lié à un trajet du véhicule automobile (10) dans la première zone de surface (38) et d'un contenu supplémentaire dans la seconde zone de surface (40), et/ou
- au moins un dispositif d'affichage pour afficher un contenu lié à un trajet du véhicule automobile (10) est agencé dans la première zone de surface (38) et au moins un dispositif d'affichage supplémentaire pour afficher un contenu supplémentaire est agencé dans la seconde zone de surface (40).

7. Véhicule automobile selon la revendication 4 ou 5 et selon la revendication 6, **caractérisé en ce que**
le dispositif de commande (54) est conçu pour entraîner, dans la seconde zone de surface (40), l'affichage du contenu lié au trajet du véhicule automobile (10) en plus des contenus supplémentaires lorsque la seconde zone de surface (40) a été amenée dans la position fonctionnelle.

8. Véhicule automobile selon l'une quelconque des revendications précédentes, **caractérisé en ce que**
- le tableau de bord (18) présente un côté supérieur (28) qui est orienté sensiblement horizontalement au moins dans la seconde position, dans lequel une surface du côté supérieur (28) est plus grande qu'une surface d'un côté inférieur (56) du tableau de bord (18) opposé au côté supérieur (28) et/ou
- le tableau de bord (18) s'étend d'une porte côté conducteur du véhicule automobile (10) à une porte côté passager du véhicule automobile (10).

9. Procédé de fonctionnement d'un véhicule automobile (10), dans lequel au moins un contenu est affiché au moyen d'au moins un dispositif d'affichage d'un tableau de bord (18) du véhicule automobile (10), qui est lié à un état de fonctionnement du véhicule automobile (10), dans lequel le véhicule automobile (10) présente un volant de direction (22) pour influencer un guidage latéral du véhicule automobile (10) par un conducteur du véhicule automobile (10),
dans lequel le tableau de bord (18) peut être déplacé par rapport à un support (16) recevant le tableau de bord (18) et agencé dans un compartiment passagers (12) du véhicule automobile (10) à partir d'une première position, dans laquelle le tableau de bord (18) est introduit dans le support (16), jusque dans une seconde position, dans laquelle le tableau de bord (18) est davantage sorti du support (16) dans la direction longitudinale (x) du véhicule que dans la première position, ou de la seconde position en retour dans la première position, dans lequel une face d'extrémité du tableau de bord (18) tournée vers le conducteur dans la première position présente une première zone de surface (38), qui est orientée dans la première position sensiblement parallèlement au sens (z) de la hauteur du véhicule, et une seconde zone de surface (40), et dans lequel une première extrémité (42) de la seconde zone de surface (40) est plus proche de la première zone de surface (38) dans la direction longitudinale (x) du véhicule qu'une seconde extrémité (44) de la seconde zone de surface (40) dans la première position,
**caractérisé en ce que**
en tant que première zone de surface (38) et seconde zone de surface (40), des zones d'un écran associé agencé sur un corps de base (48) du tableau de bord (18) sont utilisées.
